# EUROPÄISCHE PATENTSCHRIFT

(11) **EP 1 618 311 B1**
(45) Veröffentlichungstag und Bekanntmachung des Hinweises auf die Patenterteilung: **03.10.2007**
(21) Anmeldenummer: 04728785.9
(22) Anmeldetag: 22.04.2004
(51) Int. Cl.: F16D 3/50

(54) **ZENTRIERVORRICHTUNG ZUM GEGENSEITIGEN ZENTRIEREN ZWEIER WELLENENDEN**
CENTRING DEVICE FOR MUTUALLY CENTRING TWO SHAFT ENDS
DISPOSITIF DE CENTRAGE PERMETTANT UN CENTRAGE MUTUEL DE DEUX EXTREMITES D'ARBRE

(30) Priorität: 25.04.2003 DE 10318851
(43) Veröffentlichungstag der Anmeldung: 25.01.2006
(73) Patentinhaber: SGF SÜDDEUTSCHE GELENKSCHEIBENFABRIK GMBH & CO. KG., 84478 Waldkraiburg (DE)
(72) Erfinder: SCHNEIDER, Franz, 80937 München (DE); ROTHE, Joachim, 84453 Mühldorf (DE)
(74) Vertreter: Thum, Bernhard
(86) Internationale Anmeldenummer: PCT/EP2004/004288
(87) Internationale Veröffentlichungsnummer: WO 2004/097239

(56) Entgegenhaltungen:
- DE-A- 19 531 201
- GB-A- 1 562 153
- PATENT ABSTRACTS OF JAPAN Bd. 0110, Nr. 71 (M-567), 4. März 1987 (1987-03-04) & JP 61 228126 A (TOKAI RUBBER IND LTD), 11. Oktober 1986 (1986-10-11)

## Beschreibung

Die Erfindung betrifft eine Zentriervorrichtung nach dem Oberbegriff des Patentanspruchs 1.

Eine oder mehrere Zentriervorrichtungen dieser Gattung können insbesondere im Antriebsstrang von Kraftfahrzeugen vorgesehen sein. Beispielsweise sind aus DE 195 31 201 A1 mehrere Ausführungsformen schwingungsdämpfender torsionselastischer Wellengelenke bekannt, die dazu vorgesehen sind, zwischen einem Schaltgetriebe und einem Differenzialgetriebe eines Kraftfahrzeugs eingebaut zu werden. Zu jedem dieser Wellengelenke gehört eine biege- und drehelastische Gelenkscheibe, die zwischen zwei mit je einem Flansch versehenen Wellenenden angeordnet ist und diese drehmomentübertragend miteinander verbindet. Die Gelenkscheibe ist ringförmig und umschließt eine gattungsgemäße Zentriervorrichtung mit einem an einem der Wellenenden befestigten zylindrischen Zapfen und einem mit dem zweiten Wellenende einstückig ausgebildeten Zentrierkragen, der seinerseits eine elastische Zentrierhülse und einen in diese eingebetteten, den Zapfen axial verschiebbar führenden Einsatz umschließt. Auf der dem ersten Wellenende zugewandten Seite des Einsatzes ist eine mit der Zentrierhülse einstückig ausgebildete Dichtlippe angeordnet, die abdichtend an der zylindrischen Mantelfläche des Zapfens anliegt. Auf der entgegengesetzten, vom ersten Wellenende abgewandten Seite des Einsatzes umschließt der am zweiten Wellenende ausgebildete Zentrierkragen einen Hohlraum, in dem der Zapfen endet. Dieser Hohlraum ist in Richtung zum ersten Wellenende hin durch das Zusammenwirken der erwähnten Dichtlippe mit dem Zapfen begrenzt, und in entgegengesetzter Richtung durch eine in den Zentrierkragen eingepressten Deckel. Der auf diese Weise abgeschlossene Hohlraum ist vollständig mit Schmiermittel gefüllt. Diese großzügig bemessene Schmiermittelfüllung soll für eine Lebensdauerschmierung der Zentriervorrichtung ausreichen.

Im Betrieb bekannter Wellengelenke mit einer Zentriervorrichtung der beschriebenen Gattung sind gelegentlich Unwuchterscheinungen beobachtet worden, als deren Ursache man bisher Herstellungs- oder Montageungenauigkeiten der Gelenkscheibe vermutet hat. In manchen Fällen war auch unerwartet hoher Verschleiß des zylindrischen Zapfens und des ihn umschließenden zentralen Einsatzes zu beobachten; auch solchen Verschleiß hat man bisher auf erhöhte örtliche Belastungen in Folge von Unwucht zurückgeführt.

Der Erfindung liegt jedoch die Erkenntnis zugrunde, dass gerade die reichlich bemessene Schmiermittelmenge in dem durch den erwähnten, eingepressten Deckel abgeschlossenen Hohlraum mit den beobachteten Unwucht- und Verschleißerscheinungen zu tun hat. Das Schmiermittel, mit dem der Hohlraum der bekannten Zentriervorrichtung bei deren Montage möglichst vollständig gefüllt wird, ist nämlich im Betrieb einer kolbenartigen Einwirkung des Zapfens ausgesetzt, wenn die durch die Zentriervorrichtung miteinander verbundenen Wellen axiale Relativbewegungen gegeneinander ausführen. Dadurch kann in dem Schmiermittelvorrat ein erheblicher Druck entstehen, der dazu führt, dass allmählich immer mehr Schmiermittel nach außen gedrückt wird, sei es durch Verformung der einzigen vorhandenen Dichtlippe, sei es durch eine kleine zentrale Öffnung in dem eingepressten Deckel, der den Hohlraum an dessen dem Zapfenende gegenüberliegenden Ende abschließt. Das den Hohlraum somit nicht mehr vollständig ausfüllende Schmiermittel sammelt sich in Folge von im Betrieb auftretenden Zentrifugalkräften in einem radial äußeren Randbereich des Hohlraums und erreicht schließlich die zu schmierenden Zylinderflächen des Zapfens und des zentralen Einsatzes nicht mehr, so dass in der Folgezeit erhöhter Verschleiß auftritt. Die Anlagerung des Schmiermittels im Randbereich des Hohlraums mag zwar im Betrieb zunächst gleichmäßig sein; bei stillstehendem Fahrzeug sammelt sich das Schmiermittel jedoch im unteren Randbereich mit der Folge, dass es bei der nächsten Fahrt zumindest anfangs eine Unwucht hervorruft.

Diese bisher nicht erkannten Zusammenhänge haben zu der Aufgabe geführt, eine Zentriervorrichtung der eingangs genannten Gattung derart weiterzubilden, dass ein größerer Anteil des ursprünglich eingefüllten Schmiermittels während der gesamten Lebensdauer der Zentriervorrichtung erhalten und in der Lage bleibt, die zu schmierenden Zylinderflächen des Zapfens und des zentralen Einsatzes zu erreichen.

Die Aufgabe ist erfindungsgemäß mit den Merkmalen des Patentanspruchs 1 gelöst.

Die erfindungsgemäße Beschränkung des Schmiermittelvorrats auf die beiden ringförmigen Schmiermittelräume, die auf je einer Seite des Einsatzes unmittelbar an diesen angrenzend angeordnet sind, hat den Vorteil, dass mit einer geringen Schmiermittelmenge sichergestellt werden kann, dass ein ausreichender Schmierfilm zwischen dem Zapfen und dem Einsatz während der gesamten Lebensdauer der Zentriervorrichtung erhalten bleibt. Unwuchterscheinungen in Folge ungleichmäßiger Verteilung des Schmiermittels im Hohlraum des zweiten Wellenendes können nicht entstehen. Die beiden von je einer ringförmigen Dichtlippe begrenzten ringförmigen Schmiermittelräume können schon beim Hersteller der Zentriervorrichtung mit Schmiermittel gefüllt werden; bei der Montage der Zentriervorrichtung, beispielsweise während des Zusammenbaus einer Gelenkwellenanordnung, braucht im Bereich der Zentriervorrichtung kein weiteres Schmiermittel mehr zugeführt zu werden. Im Betrieb auftretende axiale Verschiebungen des am ersten Wellenende angeordneten Zapfens in bezug auf den ihn aufnehmenden, am zweiten Wellenende angeordneten zentralen Einsatz können nicht mehr dazu führen, dass in Folge einer Pumpwirkung des Zapfens im Hohlraum Schmiermittel nach außen verdrängt wird.

Vorteilhafte Weiterbildungen der Erfindung ergeben sich aus den Unteransprüchen.

Ein Ausführungsbeispiel der Erfindung wird im Folgenden anhand schematischer Zeichnungen mit weiteren Einzelheiten beschrieben.
- Fig.1: ist ein axialer Schnitt durch zwei miteinander gelenkig verbundene und in bezug zueinander zentrierte Wellenenden im Antriebsstrang eines Kraftfahrzeugs;
- Fig.2: ist ein stark vergrößerter Ausschnitt aus Fig.1.

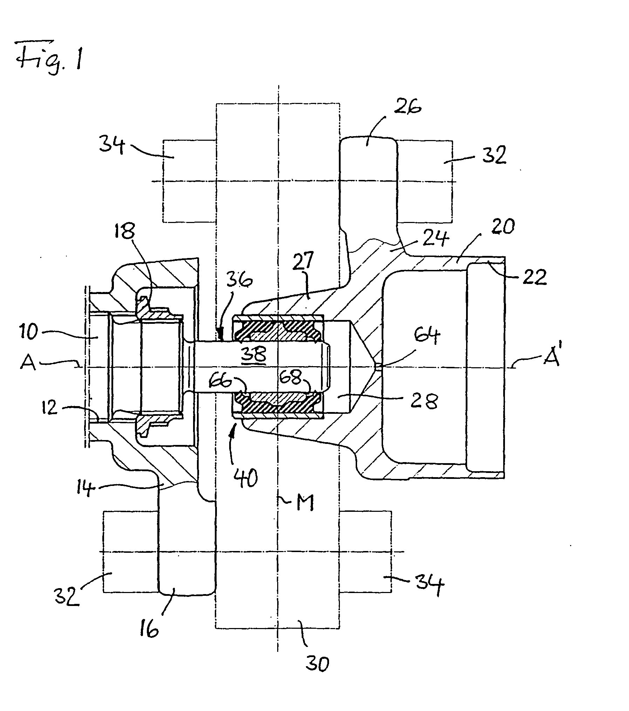

In Fig.1 ist ein erstes Wellenende 10 angedeutet, das zur Abtriebswelle eines Schaltgetriebes gehört. Am ersten Wellenende 10 ist ein äußeres Vielnutprofil 12 ausgebildet, das drehmomentübertragend mit einem komplementären inneren Vielnutprofil verbunden ist, welches an einem Flansch 14 ausgebildet ist. Der Flansch 14 hat drei in Winkelabständen von 120° radial wegragende Arme 16, ist in Richtung der Achse A des ersten Wellenendes 10 auf dieses aufgesteckt und mittels eines Schraubrings 18 festgehalten.

Dem ersten Wellenende 10 steht ein zweites Wellenende 20 gegenüber, dessen Achse A' in der abgebildeten Ruhelage der Wellenanordnung, zu der die beiden Wellenenden 10 und 20 gehören, mit der Achse A fluchtet. Am zweiten Wellenende 20 ist ein vom ersten Wellenende 10 abgewandter Befestigungskragen 22 ausgebildet, der dazu bestimmt ist, mit einem rohrförmigen Wellenabschnitt einer Kardanwelle zusammengesteckt und verschweißt zu werden. In entsprechender Weise wie das Wellenende 10 hat auch das Wellenende 20 einen Flansch 24 mit drei radial wegragenden Armen 26, die gegeneinander um 120° versetzt und in montiertem Zustand in bezug auf die vom Flansch 14 wegragenden Arme 16 auf Lücke angeordnet sind.

Dem ersten Wellenende 10 zugewandt ist am zweiten Wellenende 20 ein Zentrierkragen 27 ausgebildet, der einen axialen Hohlraum 28 umschließt.

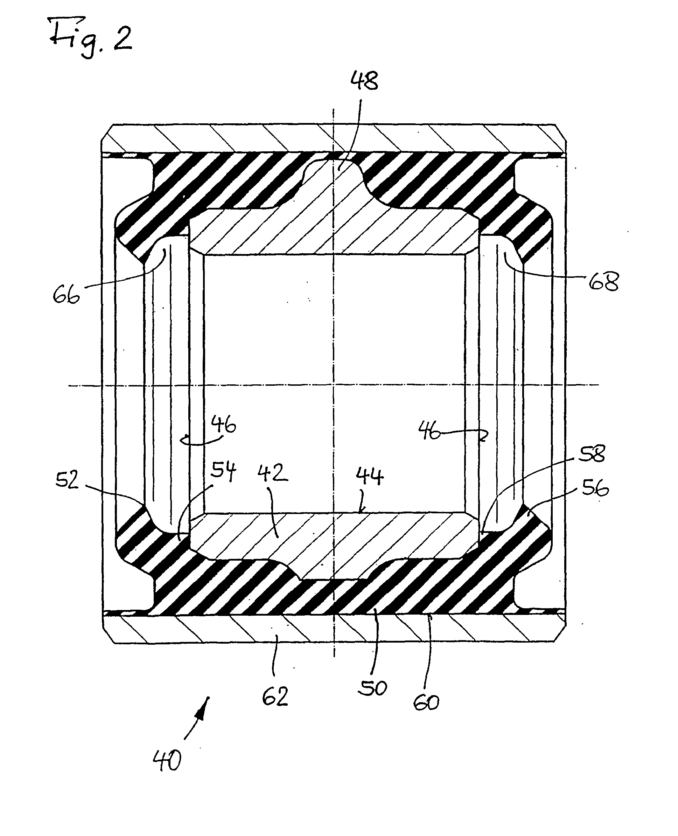

Zwischen den von je drei Armen 16 bzw. 26 gebildeten Armsternen ist eine beugeund drehelastische Gelenkscheibe 30 bekannter Bauart angeordnet, die an jedem der genannten Arme 16 und 26 mit je einer Schraube 32 und einer zugehörigen Mutter 34 befestigt ist. Die Gelenkscheibe 30 bildet eine drehmomentübertragende Verbindung zwischen den beiden Wellenenden 10 und 20, ist jedoch nicht imstande, diese ausreichend genau in bezug zueinander zu zentrieren. Deshalb sind die beiden Wellenenden 10 und 20 zusätzlich durch die im Folgenden beschriebene Zentriervorrichtung miteinander verbunden:
Das erste Wellenende 10 weist einen mit ihm einstückigen, axial wegragenden Zapfen 36 mit einer äußeren Zylinderfläche 38 auf. Dieser Zapfen 36 ist im montierten Zustand gemäß Fig.1 in einem dem zweiten Wellenende 20 zugeodneten Lager 40 derart gelagert, dass die beiden Wellenenden in bezug zueinander begrenzt axial verschiebbar, um ihre Achse A bzw. A' begrenzt drehbar sowie um Achsen beugbar sind, die sich normal zu den Achsen A und A' der beiden Wellenenden 10 und 20 erstrecken und in einer zur Achse A' normalen Mittelebene M des Lagers 40 liegen.
Für die begrenzte axiale Verschiebbarkeit ist der Zapfen 36 in einem zentralen Einsatz 42 des Lagers 40 geführt. Der Einsatz 42 besteht aus steifem, verschleißfestem Werkstoff mit guten Schmiereigenschaften, beispielsweise aus Sinterbronze und hat eine feinbearbeitete innere Zylinderfläche 44, welche die äußere Zylinderfläche 38 des Zapfens 36 mit einem Radialspiel in der Größenordnung von 15 bis 50 µm umschließt, das einerseits eine ausreichend genaue Zentrierung der beiden Wellenenden 10 und 20 in bezug zueinander sicherstellt, andererseits aber die Entstehung eines ununterbrochenen Schmierfilms zwischen den Zylinderflächen 38 und 44 zulässt. Der zentrale Einsatz 42 hat zwei zur Achse A' normale ringförmige Stirnflächen 46 sowie eine in der Mittelebene M angeordnete äußere Ringrippe 48.
Der zentrale Einsatz 42 ist in eine elastische Zentrierhülse 50 aus Gummi eingebettet und an diese anvulkanisiert. Mit der Zentrierhülse 50 einstückig, an deren dem ersten Wellenende 10 zugewandter Seite, ist eine erste ringförmige Dichtlippe 52 ausgebildet, die eine Ringschulter 54 aufweist, mit der sie an die in Fig.1 und 2 linke ringförmige Stirnfläche 46 des zentralen Einsatzes 42 anvulkanisiert ist. Die erste Dichtlippe 52 dichtet im Zwischenraum zwischen dem zentralen Einsatz 42 und dem Schraubring 18 gegen die Zylinderfläche 38 des Zapfens 36 ab. In entsprechender Weise ist auf der entgegengesetzten Seite des Zapfens 38 eine zweite ringförmige Dichtlippe 56 ebenfalls einstückig mit der elastischen Zentrierhülse 50 ausgebildet. Die zweite Dichtlippe 56 hat ebenfalls eine Ringschulter 58, und diese ist an die in Fig.1 und 2 rechte, vom ersten Wellenende 10 abgewandte ringförmige Stirnfläche 46 des zentralen Einsatzes 42 anvulkanisiert. Die zweite Dichtlippe 56 umschließt die äußere Zylinderfläche 38 des Zapfens 36 abdichtend in der Nähe von dessen in Fig.1 rechts angeordnetem freien Ende, ohne dieses je zu erreichen.

Die elastische Zentrierhülse 50 und die beiden Dichtlippen 52 und 56 haben eine gemeinsame zylindrische Außenwand 60, die an die entsprechend zylindrische Innenwand eines Rohrstücks 62 anvulkanisiert ist. Dieses Rohrstück ist, wie aus Fig.1 ersichtlich, in den Zentrierkragen 27 des zweiten Wellenendes 20 eingepresst, der zu diesem Zweck eine feinbearbeitete zylindrische Erweiterung aufweist.

Ein Druckausgleich zwischen dem Hohlraum 28 und der Umgebung wird durch eine kleine axiale Bohrung 64 im zweiten Wellenende 20 gewährleistet. Der Hohlraum 28 enthält zwischen dieser Bohrung 64 einerseits sowie der freien Stirnfläche des Zapfens 36 und der zweiten Dichtlippe 56 andererseits nichts, insbesondere ist er nicht mit Schmiermittel gefüllt. Zwischen jeder der beiden Dichtlippen 52 und 56 und der angrenzenden ringförmigen Stirnfläche 46 des zentralen Einsatzes 42 ist jedoch je ein ringförmiger Schmiermittelraum 66 bzw. 68 ausgebildet. Diese beiden Schmiermittelräume 66 und 68 kommunizieren nur mit dem durch das Radialspiel zwischen der äußeren Zylinderfläche 38 des Zapfens 36 und der zylindrischen Innenfläche 44 des zentralen Einsatzes 42 gebildeten Ringraum. Die Volumina der beiden Schmiermittelräume 66 und 68 sind gleich groß und so bemessen, dass das Gesamtvolumen dieser beiden Schmiermittelräume und des genannten Ringraums zwischen den Zylinderflächen 38 und 44, in dem sich ein Schmierfilm bildet, ungefähr zehnmal so groß ist wie das Volumen des Schmierfilms alleine. Im Vergleich dazu ist das dank der zweiten Dichtlippe 56 von Schmiermittel freigehaltene Volumen des Hohlraums 28, das nach dem Stand der Technik mehr oder weniger vollständig mit Schmiermittel gefüllt war, ungefähr zweihundertvierzig mal so groß wie das durch die Zylinderflächen 38 und 44 begrenzte Volumen des Schmierfilms.

## Patentansprüche

1. Zentriervorrichtung zum gegenseitigen Zentrieren zweier Wellenenden (10, 20), die Drehmomente übertragend und gegeneinander begrenzt axial verschiebbar, verdrehbar und beugbar miteinander verbunden sind, mit
- einem Zapfen (36), der sich von einem ersten der beiden Wellenenden (10) axial wegerstreckt und in einem Hohlraum (28) des zweiten Wellenendes (20) endet,
- einem Lager (40), das in dem Hohlraum (28) des zweiten Wellenendes (20) geordnet ist und sich zusammensetzt aus
- einem zentralen Einsatz (42), in dem der Zapfen (36) für die begrenzten relativen Axialverschiebungen und Verdrehungen der beiden Wellenenden (10, 20) gelagert ist,
- einer elastischen Zentrierhülse (50), in die der Einsatz (42) derart eingebettet ist, dass er sich relativen Beugebewegungen der Wellenenden (10, 20) anpasst, und
- einer ringförmigen Dichtlippe (52), die den Zapfen (36) abdichtend umschließt und zusammen mit diesem und dem Einsatz (42) einen ringförmigen Schmiermittelraum (66) an der dem ersten Wellenende (10) zugewandten Seite des Einsatzes (42) begrenzt,
**dadurch gekennzeichnet, dass**
- der Zapfen (36), seinem Ende benachbart, von einer zweiten ringförmigen Dichtlippe (56) umschlossen ist, die zusammen mit ihm und dem Einsatz (42) an dessen vom ersten Wellenende (10) abgewandter Seite einen zweiten ringförmigen Schmiermittelraum (68) begrenzt, und
- der Hohlraum (28) im übrigen frei von Schmiermittel ist.

2. Zentriervorrichtung nach Anspruch 1,
**dadurch gekennzeichnet, dass** beide Dichtlippen (52, 56) mit der elastischen Zentrierhülse (50) in einem Stück aus einem gummiartigen Werkstoff hergestellt sind.

3. Zentriervorrichtung nach Anspruch 1 oder 2,
**dadurch gekennzeichnet, dass** beide Dichtlippen (52, 56) und die Zentrierhülse (50) von einem gemeinsamen Rohrstück (62) umschlossen sind.

4. Zentriervorrichtung nach Anspruch 3,
**dadurch gekennzeichnet, dass** beide Dichtlippen (52, 56) und die Zentrierhülse (50) an den Einsatz (42) und an das Rohrstück (62) anvulkanisiert sind.

5. Zentriervorrichtung nach Anspruch 3 oder 4,
**dadurch gekennzeichnet, dass** beide Dichtlippen (52, 56) von je einer achsnormalen Ringschulter (58) der Zentrierhülse (50) ausgehen, die an je eine Stirnfläche des Einsatzes (42) anvulkanisiert ist.

6. Zentriervorrichtung nach einem der Ansprüche 1 bis 5,
**dadurch gekennzeichnet, dass** das Gesamtvolumen der beiden Schmiermittelräume (66, 68) und des sich zwischen dem Zapfen (36) und dem Einsatz (42) bildenden Schmierfilms nur zwei- bis dreißigmal so groß ist wie das Volumen des Schmierfilms alleine.

7. Zentriervorrichtung nach Anspruch 6,
**dadurch gekennzeichnet, dass** das genannte Gesamtvolumen zehnmal so groß ist wie das Volumen des Schmierfilms.

## Claims

1. Centering device for the mutual centering of two shaft ends (10, 20), which are in torque-transmitting connection with one another and are to a limited extent axially displaceable, rotatable and deflectable with respect to one another, comprising:
- a stud (36), which extends axially from a first of the two shaft ends (10) and terminates in a cavity (28) of the second shaft end (20),
- a bearing (40), which is disposed in the cavity (28) of the second shaft end (20) and is composed of:
- a central liner (42), in which the stud (36) is supported for the limited relative axial displacements and rotations of the two shaft ends (10, 20),
- a resilient centering socket (50), into which the liner (42) is embedded in such a manner that it accommodates relative deflections of the shaft ends (10, 20), and
- a ring-shaped sealing lip (52), which sealingly surrounds the stud (36) and together with the stud and the liner (42) delimits an annular lubricant space (66) on the side of the liner (42) facing the first shaft end (10),
**characterized in that**
- the stud (36), proximate its end, is encompassed by a second ring-shaped sealing lip (56), which together with the stud and the liner (42) on its side facing away from the first shaft end (10) delimits a second annular lubricant space (68), and
- the cavity (28) is otherwise free of lubricant.

2. Centering device according to claim 1,
**characterized in that** both sealing lips (52, 56) are manufactured in one piece with the resilient centering socket (50) from an elastomeric material.

3. Centering device according to claim 1 or 2,
**characterized in that** both sealing lips (52, 56) and the centering socket (50) are encompassed by a common sleeve (62).

4. Centering device according to claim 3,
**characterized in that** both sealing lips (52, 56) and the centering socket (50) are vulcanized onto the liner (42) and onto the sleeve (62).

5. Centering device according to claim 3 or 4,
**characterized in that** both sealing lips (52, 56) emanate from a respective axially-perpendicular ring-like shoulder of the centering socket (50), which is vulcanized onto a respective end face of the liner (42).

6. Centering device according to one of claims 1 to 5,
**characterized in that** the total volume of the two lubricant spaces (66, 68) and the lubricant film that forms between the stud (36) and the liner (42) is only from two to thirty times as large as the volume of the lubricant film alone.

7. Centering device according to claim 6,
**characterized in that** the said total volume is ten times as large as the volume of the lubricant film.

## Revendications

1. Dispositif de centrage permettant un centrage mutuel de deux extrémités d'arbre (10, 20) qui sont reliées l'une à l'autre en transmettant des couples de rotation et avec faculté de translation axiale limitée, de rotation limitée et de flexion limitée, comportant
- un tenon (36) qui s'étend axialement en éloignement d'une première des deux extrémités d'arbre (10) et qui se termine dans une cavité (28) de la seconde extrémité d'arbre (20),
- un palier (40) qui est agencé dans la cavité (28) de la seconde extrémité d'arbre (20) et qui se compose de
- un premier insert central (42) dans lequel est monté le tenon (36) pour les translations axiales relatives limitées et pour les rotations des deux extrémités d'arbre (10, 20),
- une douille de centrage élastique (50) dans laquelle est noyé l'insert (42) de manière à s'adapter à des mouvements de flexion relatifs des extrémités d'arbre (10, 20), et
- une lèvre d'étanchéité annulaire (52) qui entoure avec étanchement le tenon (36) et qui délimite, conjointement avec celui-ci et avec l'insert (42), une chambre à lubrifiant annulaire (66) sur le côté de l'insert (42) tourné vers la première extrémité d'arbre (10),
**caractérisé en ce que**
- au voisinage de son extrémité, le tenon (36) est entouré par une seconde lèvre d'étanchéité annulaire (56) qui délimite, conjointement avec celui-ci et avec l'insert (42), une seconde chambre à lubrifiant annulaire (68) sur son côté détourné de la première extrémité d'arbre (10), et
- la cavité (28) est par ailleurs exempte de lubrifiant.

2. Dispositif de centrage selon la revendication 1,
**caractérisé en ce que** les deux lèvres d'étanchéité (52, 56) sont fabriquées d'un seul tenant avec la douille de centrage élastique (50) en un matériau caoutchouteux.

3. Dispositif de centrage selon la revendication 1 ou 2,
**caractérisé en ce que** les deux lèvres d'étanchéité (52, 56) et la douille de centrage (50) sont entourées par un morceau de tube commun (62).

4. Dispositif de centrage selon la revendication 3,
**caractérisé en ce que** les deux lèvres d'étanchéité (52, 56) et la douille de centrage (50) sont vulcanisées sur l'insert (42) et sur le morceau de tube (62).

5. Dispositif de centrage selon la revendication 3 ou 4,
**caractérisé en ce que** les deux lèvres d'étanchéité (52, 56) partent chacune d'un épaulement annulaire (58) perpendiculaire à l'axe de la douille de centrage (50), qui est vulcanisé sur une surface frontale respective de l'insert (42).

6. Dispositif de centrage selon l'une des revendications 1 à 5,
**caractérisé en ce que** le volume total des deux chambres à lubrifiant (66, 68) et du film lubrifiant qui se forme entre le tenon (36) et l'insert (42) n'est que deux à trente fois plus grand que le volume du film lubrifiant à lui seul.

7. Dispositif de centrage selon la revendication 6,
**caractérisé en ce que** ledit volume total est dix fois plus grand que le volume du film lubrifiant.
